# EUROPEAN PATENT APPLICATION

(11) **EP 3 252 119 A1**
(43) Date of publication of application: **06.12.2017**
(21) Application number: 16743417.4
(22) Date of filing: 27.01.2016
(51) Int. Cl.: C09D 175/16, C09D 4/02, C09D 7/12

(54) **RESIN THIN-FILM-FORMING COMPOSITION FOR EASILY-PEELABLE PROTECTION**

(30) Priority: 27.01.2015 JP 2015013763
(71) Applicant: Nissan Chemical Industries, Ltd., Chiyoda-ku Tokyo 101-0054 (JP)
(72) Inventor: SATO, Tetsuo, Funabashi-shi Chiba 274-0052 (JP)
(74) Representative: Hoffmann Eitle
(86) International application number: PCT/JP2016/052327
(87) International publication number: WO 2016/121814

(57) **Abstract**

The invention provides a composition for forming an easily removable protective resin thin film, characterized in that the composition contains a urethane (meth)acrylate compound having a poly(tetramethylene glycol) backbone as a main backbone, a (meth)acrylate including at least a mono-functional (meth)acrylate, and a radical polymerization initiator, wherein the mono-functional (meth)acrylate content with respect to the entire amount of the (meth)acrylate is 50 mass% or higher.

## Description

### Technical Field

The present invention relates to a composition for forming an easily removable protective resin thin film, to an easily removable protective resin thin film, and to a method for protecting the surface of an object to which a coating material is applied (hereinafter may be referred to as a coating object).

### Background Art

Generally, a coating material called a strippable paint is a type of coating material, which is applied to the surface of an article to form a temporary protective film thereonto for protecting the article against wear and corrosion, wherein the film can be peeled from the article after passage of a certain necessary period without damaging the article.

Generally know examples of such a strippable paint include a coating material produced by dissolving a synthetic rubber or a chlorine rubber in organic solvent, and a coating material produced by dissolving a mixture of a vinyl chloride-vinyl acetate copolymer with a plasticizer in organic solvent.

However, these solvent-containing coating materials require a long period of time (5 to 10 minutes in heat drying) for drying the applied coating material. In addition, when such a coating material is applied onto an article made of a synthetic resin, the surface of the article may swell by the organic solvent or may be dissolved in the solvent.

Also, an acrylic emulsion prepared by dispersing an acrylic resin in water or a similar material is employed as a strippable paint. The coating material (paint) requires a long period of time for drying after application thereof (see, for example, Patent Documents 1 and 2).

### [Prior Art Documents]

### [Patent Documents]

Patent Document 1: Japanese Patent Application Laid-Open (*kokai*) No. 2014-105314
Patent Document 2: Japanese Patent Application Laid-Open (*kokai*) No. 2000-226539
Patent Document 3: Japanese Patent Application Laid-Open (*kokai*) No. 1992-041190
Patent Document 4: Japanese Patent Application Laid-Open (*kokai*) No. 2005-15594
Patent Document 5: Japanese Patent Application Laid-Open *(kokai)* No. 1993-301935

### Summary of the Invention

### Problems to be Solved by the Invention

Under such circumstances, there has been proposed, as a composition for forming a temporarily protective coating film on the surface of an article (hereinafter may be referred to as a coating object), a photo-curable resin composition comprising a (meth)acrylic acid-a (meth)acrylate ester copolymer, an unsaturated compound having a polymerizable double bond (e.g., an acrylic acid adduct of phenyl glycidyl ether), and a photopolymerization initiator (see, for example, Patent Documents 3 to 5).

After application, such a radical-curable resin composition is hardened through light irradiation and/or heating for a short period of time (about 1 to about 5 minutes), to thereby form a tough coating film. Thus, when such a radical-curable resin composition is used, coating operability can be enhanced, and the composition can be prepared by use of no organic solvent, whereby suppression of corrosion of the surface of the target coating object would be expected.

In view of the foregoing, the present inventor has focused on a radical-curable resin composition and conducted extensive studies to develop a novel strippable paint. As a result, the inventor has found that a resin composition suited for a strippable paint and a resin thin film thereof can be produced, when the following conditions are satisfied:
(1) the coating film can be cured through light irradiation and/or heating for a short period of time;
(2) the cured film exhibits good adhesion to the surface of an article (e.g., a glass article);
(3) the cured film has a non-tacky surface;
(4) the cured film is not peeled from the article even after a step of immersing the article in hot water (80°C) or a similar step; and
(5) the cured film has tenacity and can be easily peeled in a removal step without tearing, even after the above step.

Among these conditions, condition (5) relating to tenacity of the cured film is particularly important. If the cured film is broken or torn during removal, the peeling step must be repeated several times for completely removing the cured film. In such a case, a long operation time is required. Thus, a strippable paint not satisfying condition (5) cannot be practically used on an industrial scale.

Thus, an object of the present invention is to provide a composition which is suitable as a strippable paint which meets the aforementioned conditions and can provide an easily removable (or peelable) resin thin film. Another object is to provide such a resin thin film. Still another object is to provide a method for protecting the surface of a coating object by use of the resin thin film.

### Means for Solving the Problems

The present inventor has conducted extensive studies in order to attain the aforementioned objects and have found the following. Firstly, when a urethane (meth)acrylate compound having a poly(tetramethylene glycol) backbone as a main backbone is mixed with a specific amount of a (meth)acrylate including at least a mono-functional (meth)acrylate or specific amounts of a mono-functional (meth)acrylate and a ≥2-functional (meth)acrylate, and with a radical polymerization initiator, a uniform composition can be readily prepared. Secondary, when the thus-prepared composition is used, a tough and flexible cured film which exhibits good adhesion to the surface of an object (e.g., a glass article) and which has a non-tacky surface can be formed through light irradiation and/or heating for a short period of time, and the formed cured film is not peeled from the article even after immersion of the coating object in hot water or a similar step and can be easily peeled from the coating object by hand. The present invention has been accomplished on the basis of these findings.

There has been reported a strippable paint employing a urethane (meth)acrylate compound (see, for example, Patent Document 5). However, there is known no document which suggests that a composition or a resin thin film having characteristic features of the present invention can be produced by use of a urethane (meth)acrylate compound having a poly(tetramethylene glycol) backbone as a main backbone, a specific amount of a mono-functional (meth)acrylate, and an optional ≥2-functional (meth)acrylate.

Accordingly, the present invention provides the following.
1. A composition for forming an easily removable protective resin thin film, characterized in that the composition comprises a urethane (meth)acrylate compound having a poly(tetramethylene glycol) backbone as a main backbone, a (meth)acrylate including at least a mono-functional (meth)acrylate, and a radical polymerization initiator, wherein the mono-functional (meth)acrylate content with respect to the entire amount of the (meth)acrylate is 50 mass% or higher.
2. An easily removable protective resin thin film-forming composition according to 1 above, wherein the (meth)acrylate includes the mono-functional (meth)acrylate and a ≥2-functional (meth)acrylate.
3. An easily removable protective resin thin film-forming composition according to 1 or 2 above, wherein the mono-functional (meth)acrylate includes a mono-functional (meth)acrylate having a ring structure.
4. An easily removable protective resin thin film-forming composition according to any of 1 to 3 above, wherein the amount of the urethane (meth)acrylate compound having a poly(tetramethylene glycol) backbone as a main backbone in the composition is smaller than 70 mass%.
5. An easily removable protective resin thin film-forming composition according to any of 1 to 4 above, wherein the amount of the urethane (meth)acrylate compound having a poly(tetramethylene glycol) backbone as a main backbone in the composition is smaller than 50 mass%.
6. An easily removable protective resin thin film, characterized by being formed of a cured product of an easily removable protective resin thin film-forming composition as recited in any of 1 to 5 above.
7. A method for protecting a surface of a coating object, characterized in that the method comprises using an easily removable protective resin thin film as recited in 6 above.

### Effects of the Invention

By use of the easily removable protective resin thin film-forming composition of the present invention, a tough and flexible resin thin film which exhibits good adhesion to the surface of an article (e.g., a glass article) and which has a non-tacky surface can be formed through light irradiation and/or heating for a short period of time. In addition, the thus-formed resin thin film is not peeled from the coating object even after immersion of the coating object in hot water or a similar step, but can be easily peeled from the coating object by hand. The resin thin film, having such characteristics, is envisaged to be used for temporarily protecting the surfaces of articles made of a material such as steel or synthetic resin from corrosion, wear, staining, etc., in, for example, processing (polishing or cutting) of articles and storage of articles.

### Modes for Carrying Out the Invention

The easily removable protective resin thin film-forming composition of the present invention (hereinafter may be referred to simply as "composition") contains a urethane (meth)acrylate compound having a poly(tetramethylene glycol) backbone as a main backbone.

No particular limitation is imposed on the urethane (meth)acrylate compound having a poly(tetramethylene glycol) backbone as a main backbone employed in the present invention, and the urethane (meth)acrylate compound may be a commercial product or may be produced through a known method.

A possible example of the urethane (meth)acrylate compound having a poly(tetramethylene glycol) backbone is a reaction product obtained from a bi-functional poly(tetramethylene glycol), a polyisocyanate compound, and a (meth)acrylate compound having a hydroxy group.

Examples of the commercial product include, but are not limited to, SHIKOH (registered trademark) UV-2750B and UV-7000B (products of The Nippon Synthetic Chemical Industry Co., Ltd.).

The urethane (meth)acrylate compound having a poly(tetramethylene glycol) backbone as a main backbone employed in the present invention generally has a weight average molecular weight of about 500 to about 100,000. From the viewpoint of tenacity and other properties of the formed thin film, the molecular weight is preferably 1,000 or higher, more preferably 2,000 or higher. From the viewpoint of suppressing an excessive increase in viscosity of the composition to ensure applicability (coatability), the molecular weight is preferably 50,000 or lower, more preferably 10,000 or lower, still more preferably 8,000 or lower, yet more preferably 5,000 or lower. Notably, the weight average molecular weight is a polystyrene-reduced measurement obtained through gel permeation chromatography (GPC) (the same is applied throughout the specification).

In the present invention, the amount of the urethane (meth)acrylate compound having a poly(tetramethylene glycol) main backbone with respect to the entirety of the composition is preferably less than 70 mass% and 10 mass% or more, based on the entirety of resin liquid, more preferably less than 50 mass% and 10 mass% or more, still more preferably less than 45 mass% and 20 mass% or more, still more preferably less than 40 mass% and 30 mass% or more. Through controlling the compound content to be lower than the upper limit, an excessive increase in viscosity of the resin solution is suppressed, to thereby easily ensure coating composition applicability, and the relative ethylenic unsaturated monomer content increases, to thereby facilitate controlling adhesion-to-substrate or the like. Through controlling the compound content to be equal to or higher than the lower limit, resin thin film peelability can be readily ensured.

The composition of the present invention contains, as an ethylenic unsaturated monomer, a (meth)acrylate including at least a mono-functional (meth)acrylate, for the purposes of improving adhesion of the formed resin thin film, lowering viscosity of the resin solution, and the like. The (meth)acrylate may include both the mono-functional (meth)acrylate and a ≥2-functional (meth)acrylate. As used herein, the term "ethylenic unsaturated monomer" refers to a compound having at least one ethylenic unsaturated double bond.

The mono-functional (meth)acrylate is suitably an mono-functional alkyl (meth)acrylate, with an mono-functional alkyl (meth)acrylate having a C≥6 alkyl group being more preferred.

The alkyl group may be any of linear, branched, and cyclic alkyl groups. Examples of the alkyl group include C1 to C20 linear or branched alkyl groups such as methyl, ethyl, n-propyl, isopropyl, n-butyl, isobutyl, sec-butyl, tert-butyl, n-pentyl, n-hexyl, n-heptyl, n-octyl, n-nonyl, and n-decyl; and C3 to C20 cycloalkyl groups such as cyclopropyl, cyclobutyl, cyclopentyl, cyclohexyl, cycloheptyl, cyclooctyl, cyclononyl, cyclodecyl, bicyclobutyl, bicyclopentyl, bicyclohexyl, bicycloheptyl, bicyclooctyl, bicyclononyl, and bicyclodecyl.

The mono-functional (meth)acrylate preferably has a ring structure in the molecule thereof, from the viewpoint of enhancing tenacity of the resin thin film. A polymer of a (meth)acrylate having a ring structure has a higher glass transition temperature (Tg), as compared with a (meth)acrylate having a linear substituent, whereby hard film can be readily formed. In contrast, a substituent having a ring structure has a smaller free volume, as compared with a linear substituent. As a result, entangling of (meth)acrylate main chains, which are essential for providing tenacity of resin thin film, cannot be impeded. Thus, a resin thin film formed from monomers including a mono-functional (meth)acrylate having a ring structure is conceived to have not only high hardness but also tenacity.

Specific examples of the mono-functional alkyl (meth)acrylate having a C≥6 alkyl group include hexyl (meth)acrylate, 2-ethylhexyl (meth)acrylate, heptyl (meth)acrylate, octyl (meth)acrylate, isooctyl (meth)acrylate, nonyl (meth)acrylate, isononyl (meth)acrylate, decyl (meth)acrylate, isodecyl (meth)acrylate, dodecyl (meth)acrylate, stearyl (meth)acrylate, isostearyl (meth)acrylate, lauryl(meth) acrylate, cyclohexyl (meth)acrylate, isobornyl (meth)acrylate, isoamyl (meth)acrylate, dicyclopentenyl (meth)acrylate, and dicyclopentanyl (meth)acrylate.

Specific examples of the (meth)acrylate other than the mono-functional alkyl (meth)acrylate having a C≥6 alkyl group include methyl (meth)acrylate, ethyl (meth)acrylate , phenoxyethyl (meth)acrylate , glycerin mono(meth)acrylate , glycidyl (meth)acrylate, n-butyl (meth)acrylate, benzyl (meth)acrylate, ethylene oxide-modified (n=2) phenol (meth)acrylate, propylene oxide-modified (n=2.5) nonylphnenol (meth)acrylate, 2-(meth)acryloyloxyethyl acid phosphate, furfuryl (meth)acrylate, carbitol (meth)acrylate, benzyl (meth)acrylate, butoxyethyl (meth)acrylate, allyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-hydroxy-3-phenoxypropyl (meth)acrylate, 3-chloro-2-hydroxypropyl (meth)acrylate, and 4-acryloylmorpholine. Among them, those having no hydroxy group are preferred. The molecular weight thereof is preferably about 100 to about 300.

Of these, isodecyl (meth)acrylate, lauryl (meth)acrylate, cyclohexyl (meth)acrylate, isostearyl (meth)acrylate, and 2-ethylhexyl (meth)acrylate are preferred.

These mono-functional (meth)acrylates may be used singly or in combination of two or more species.

The ≥2-functional (meth)acrylate may be a bi-functional (meth)acrylate and a ≥3-functional (meth)acrylate.

Examples of the bi-functional (meth)acrylate include ethylene glycol di(meth)acrylate, diethylene glycol di(meth)acrylate, tetraethylene glycol di(meth)acrylate, poly(ethylene glycol) di(meth)acrylate, propylene glycol di(meth)acrylate, dipropylene glycol di(meth)acrylate, poly(propylene glycol) di(meth)acrylate, butylene glycol di(meth)acrylate, neopentyl glycol di(meth)acrylate, ethylene oxide-modified bisphenol A di(meth)acrylate, propylene oxide-modified bisphenol A di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, phthalate diglycidyl ester di(meth)acrylate, and hydroxypivalic acid-modified neopentylglycol di(meth)acrylate.

Examples of the ≥3-functional (meth)acrylate include trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(meth)acryloyloxyethoxytrimethylolpropane, and glycerin polyglycidyl ether poly(meth)acrylate.

Among them, bi-functional (meth)acrylates and trifunctional (meth)acrylates are preferred, with bi-functional (meth)acrylates being more preferred.

These ≥2-functional (meth)acrylates may be used singly or in combination of two or more species.

In the present invention, the total (meth)acrylate content of the composition; i.e., the total amount of mono-functional (meth)acrylate and ≥2-functional (meth)acrylate, is generally 10 mass% or higher. However, from the viewpoint of lowering the viscosity of the composition and enhancing operability, the total (meth)acrylate content is preferably 20 mass% or higher, more preferably 30 mass% or higher. From the viewpoint of controlling the tenacity and adhesion of the cured product, the total (meth)acrylate content is preferably 35 mass% or higher, more preferably 40 mass% or higher.

In the present invention, in the case where ≥2-functional (meth)acrylate is used in combination, the mono-functional (meth)acrylate content is greater than the ≥2-functional (meth)acrylate content, in order to ensure the tenacity of the formed resin thin film to such an extent that the composition can be used as a strippable paint. When the ≥2-functional (meth)acrylate content is greater than the mono-functional (meth)acrylate content, the formed resin thin film becomes hard, but fragile. In such a case, tenacity of the resin thin film decreases.

In the present invention, the ratio of the mono-functional (meth)acrylate content (Wₛ) to the sum including the ≥2-functional (meth)acrylate content (Wₘ), Wₘ/(Wₛ+Wₘ), is less than 50 mass% (i.e., Wₛ/(Wₛ+wₘ)≥50 mass%). From the viewpoint of tenacity of the cured film, the value is preferably 40 mass% or less, more preferably 30 mass% or less. From the viewpoint of enhancing waterproofness of the resin thin film, the value is preferably 1 mass% or higher, more preferably 5 mass% or higher, still more preferably 10 mass% or higher, yet more preferably 15 mass% or higher.

The composition of the present invention may contain a polar-group-having monomer which allows copolymerization with the aforementioned mono-functional (meth)acrylate and ≥2-functional (meth)acrylate, in order to enhance adhesion of the thin film to the substrate, heat resistance, and the like.

When the composition of the present invention contains a polar-group-having monomer, the amount thereof by mole does not exceed the amount of the sum of the mono-functional (meth)acrylate and the ≥2-functional (meth)acrylate. If the relative amount of the polar-group-having monomer increases, the formed resin thin film has poor waterproofness. As a result, peelability or the like may be impaired.

The composition of the present invention contains a radical polymerization initiator.

The radical polymerization initiator may be a radiation radical polymerization initiator and a thermal radical polymerization initiator.

Specific examples of the radiation radical polymerization initiator include α-diketones such as diacetyl; acyloins such as benzoin; acyloin ethers such as benzoin methyl ether, benzoin ethyl ether, and benzoin isopropyl ether; benzophenones such as thioxanthone, 2,4-diethylthioxanthone, thioxanthone-4-sulfonic acid, benzophenone, 4,4'-bis(dimethylamino)benzophenone, and 4,4'-bis(diethylamino)benzophenone; and acetophenones such as acetophenone, p-dimethylaminoacetophenone, α,α-dimethoxy-α-acetoxyacetophenone, α,α-dimethoxy-α-phenylacetophenone, p-methoxyacetophenone, 2-methyl-1-(4-methylthiophenyl)-2-morpholinopropan-1-one, 1-[2-methyl-4-methylthiophenyl]-2-morpholino-1-propanone, 2-hydroxy-2-methyl-1-phenylpropan-1-one, 1-hydroxycyclohexyl phenyl ketone, α,α-dimethoxy-α-morpholinomethylthiophenylacetophenone, and 2-benzyl-2-dimethylamino-1-(4-morpholinophenyl)-butan-1-one; quinones such as anthraquinone and 1,4-naphthoquinone; halogen compounds such as phenacyl chloride, tribromomethylphenyl sulfone, and tris(trichloromethyl)-s-triazine; bisimidazoles such as [1,2'-bisimidazole]-3,3',4,4'-tetraphenyl, and [1,2'-bisimidazole]-1,2'-dichlorophenyl-3,3',4,4'-tetraphenyl; peroxides such as di-tert-butyl peroxide; acylphosphine oxides such as diphenyl(2,4,6-trimethylbenzoyl)phosphine oxide; and p-dimethylaminobenzoate esters such as ethyl p-dimethylaminobenzoate.

The radiation radical polymerization initiator may be a commercial product, and examples thereof include, but are not limited to, IRGACURE (registered trademark) 651, 184, 2959, 127, 907, 369, 379EG, 819, and TPO, DAROCUR (registered trademark) 1173 and MBF (products of BASF Japan), and KAYACURE DETX-S and EPA (products of Nippon Kayaku Co., Ltd.).

Examples of the thermal radical polymerization initiator include a peroxide, an azo compound, and a redox initiator.

Specific examples of the peroxide include tert-butyl(3,5,5-trimethylhexanoyl) peroxide, tert-butyl hydroperoxide, cumene hydroperoxide, tert-butyl peroxyacetate, tert-butyl peroxybenzoate, tert-butyl peroxyoctanoate, tert-butyl peroxyneodecanate, tert-butyl peroxyisobutyrate, lauroyl peroxide, tert-amyl peroxypivalate, tert-butyl peroxypivalate, dicumyl peroxide, benzoyl peroxide, potassium persulfate, and ammonium persulfate.

Specific examples of the azo compound include dimethyl 2,2'-azobis(2-methylpropionate), 2,2'-azobis(isobutyronitrile), 2,2'-azobis(2-butanenitrile), 4,4'-azobis(4-pentanoic acid), 1,1'-azobis(cyclohexanecarbonitrile), 2-(tert-butylazo)-2-cyanopropane, 2,2'-azobis(N,N'-dimethyleneisobutylamidine) dichloride, 2,2'-azobis(2-amidinopropane) dichloride, 2,2'-azobis(N,N-dimethyleneisobutylamide), 2,2'-azobis(2-methyl-N-[1,1-bis(hydroxymethyl)-2-hydroxyethyl]proionamide), 2,2'-azobis(2-methyl-N-[1,1-bis(hydroxymethyl)ethyl]proionamide), 2,2'-azobis[2-methyl-N-(2-hydroxyethyl)proionamide), and 2,2'-azobis(isobutylamide) dihydrate.

Specific examples of the redox initiator include mixtures of hydrogen peroxide, an alkyl peroxide, a peroxide ester, and a percarbonate salt, with an iron salt, titanous salt, zinc formaldehyde sulfoxylate, sodium formaldehyde sulfoxylate, a reducing sugar, etc. Examples also include mixtures of an alkali metal persulfate, perborate, or perchlorate, or an ammonium perchlorate, with an alkali metal bisulfite (e.g., sodium metabisulfite) or a reducing sugar. Examples also include mixtures of an alkali metal persulfate, with a similar acid such as an arylsulfonic acid (e.g., benzenesulfonic acid) or a reducing sugar.

Examples of commercial products of the thermal radical polymerization initiator include Perhexa (registered trademark) HC (product of NOF Corporation) and MAIB (product of Tokyo Chemical Industry, Co., Ltd.).

These radical polymerization initiators may be used singly or in combination of two or more species.

The radical polymerization initiator content of the composition of the present invention is preferably 0.1 to 50 parts by mass, with respect to 100 parts by mass in the total amount of the urethane (meth)acrylate compound having a poly(tetramethylene glycol) backbone as a main backbone and the (meth)acrylate (i.e., a mono-functional (meth)acrylate or a mono-functional (meth)acrylate with a ≥2-functional (meth)acrylate), from the viewpoints of suppressing the radical deactivation by oxygen, ensuring storage stability, etc. The radical polymerization initiator content is more preferably 1 to 30 parts by mass, further more preferably 2 to 30 parts by mass.

The composition of the present invention may further contain, along with the radical polymerization initiator, a hydrogen-donating compound such as mercaptobenzothiazole or mercaptobenzooxazole, or a radiation sensitizer.

The composition of the present invention may contain a solvent.

The solvent employed in the composition can uniformly dissolve ingredients of the resin composition of the present invention and is inert in reaction with the ingredients.

Specific examples of the solvent include carbonate esters such as ethylene carbonate and propylene carbonate; fatty acids such as caproic acid and caprylic acid; alcohols such as 1-octanol, 1-nonanol, and benzyl alcohol; polyol alkyl ethers such as ethylene glycol monoethyl ether, diethylene glycol monomethyl ether, and propylene glycol monomethyl ether (PGME); polyol alkyl ether acetates such as ethylene glycol ethyl ether acetate and propylene glycol monomethyl ether acetate; polyol aryl ether acetates such as phenyl cellosolve acetate; esters such as ethyl 3-ethoxypropionate, methyl 3-methoxypropionate, ethyl 2-hydroxypropionate, ethyl lactate, and γ-butyrolactone; and ketols such as diacetone alcohol. Notably, these solvents may be used singly or in combination of two or more species.

When the composition of the present invention contains a solvent, the solvent content with respect to the entirety of the composition is about 5 to about 30 mass%.

The composition of the present invention may further contain a surfactant, for enhancing applicability, defoaming performance, leveling performance, etc.

Specific examples of the surfactant include fluorine-containing surfactants and silicone-based surfactants. Examples of commercial products thereof include BM-1000 and BM-1100 (products of BM Chemie); Megafac F142D, F172, F173, F183, and F570 (products of DIC); Fluorad FC-135, FC-170C, FC-430, and FC-431 (products of Sumitomo 3M); Surflon S-112, S-113, S-131, S-141, and S-145 (products of Asahi Glass Co., Ltd.); and SH-28PA, -190, -193, SZ-6032, and SF-8428 (products of Dow Corning Toray).

When the composition of the present invention contains a surfactant, the surfactant content is preferably 5 mass% or less with respect to the entirety of the composition, from the viewpoint of preventing bleed out of the surfactant from the cured film.

The composition of the present invention may further contain a thermal polymerization inhibitor.

Specific examples of the thermal polymerization inhibitor include pyrogallol, benzoquinone, hydroquinone, Methylene Blue, tert-butyl catechol, monobenzyl ether, methylhydroquinone, amylquinone, amyloxyhydroquinone, n-butylphenol, phenol, hydroquinone monopropyl ether, 4,4'-(1-methylethylidene)bis(2-methylphenol), 4,4'-(1-methylehtylidene)bis(2,6-dimethylphenol), 4,4'-[1-[4-(1-(4-hydroxyphenyl)-1-methylethyl)phenyl]ethylidene]bisphenol, 4,4',4"-ethylidenetris(2-methylphenol), 4,4',4"-ethylidenetrisphenol, and 1,1,3-tris(2,5-dimethyl-4-hydroxyphenyl)-3-phenylpropane.

When the composition of the present invention contains a thermal polymerization inhibitor, the thermal polymerization inhibitor content is preferably 5 mass% or less with respect to the entirety of the composition, from the viewpoint of preventing a considerable drop in radical polymerization efficiency, to thereby ensure appropriate radical polymerization performance.

The composition of the present invention may further contain a releasing agent, for the purpose of enhancing film peeling performance during peeling of the film.

The releasing agent may be any of a wax compound, a silicone compound, and a fluorine-containing compound. Among them, a silicone compound (e.g., silicone oil having a siloxane bonds forming the main backbone, or emulsion thereof) is preferred, from the viewpoints of heat resistance, moisture resistance, and time-over stability.

The releasing agent may be available as a commercial product. Examples of the commercial product include Shin-Etsu Silicone (registered trademark) KF-96-10CS, KF-6012, X-22-2426, and X-22-164E (products of Shin-Etsu Chemical Co., Ltd.); TEGO RAD 2200N, and TEGO RAD 2700 (products of Evonik); and BYK-333 (product of BYK Japan).

When the composition of the present invention contains a releasing agent, the content thereof is preferably 5 mass% or less with respect to the entire amount of the composition, for the purpose of preventing bleed out thereof from the cured film.

The composition of the present invention may further contain other ingredients such as a leveling agent or a defoaming agent.

The composition of the present invention may be prepared by mixing a urethane (meth)acrylate compound having a poly(tetramethylene glycol) backbone as a main backbone, a mono-functional (meth)acrylate, an optional ≥2-functional (meth)acrylate, and other ingredients.

In one mode of production, ingredients in specific amounts are fed to a tank made of SUS for preparation equipped with stirring paddles, and the mixture is stirred at room temperature (about 25°C) or under heating, to thereby form a uniform mixture.

Also, the thus-prepared composition may be optionally filtered through a mesh, a membrane filter, or the like.

Notably, in the case where a certain ingredients of the composition also exhibits the same function as that of another ingredient, the component balance must be determined in consideration of the situation.

The aforementioned composition of the present invention is applied onto a substrate such as a glass substrate or a metal substrate, and the applied composition is cured through light irradiation and/or heating, whereby the resin thin film of the present invention can be formed. That is, the resin thin film of the present invention is formed of the cured product of the composition of the present invention.

No particular limitation is imposed on the application method, and the method includes spin coating, slit coating, roller coating, screen printing, applicator coating, and disperser coating.

The thickness of the resin thin film is preferably 5 to 250 µm, more preferably 5 to 150 µm, still more preferably 10 to 50 µm, from the viewpoint of realizing characteristics including waterproofness and peelability at high reproducibility.

The film thickness may be modified by, for example, changing the solid content of the composition or the amount of the composition to be applied onto the substrate. Examples

The present invention will next be described in detail by way of Examples, which should not be construed as limiting the invention thereto. Definitions of the abbreviations used in the Examples are as follows.

UV-7000B: urethane acrylate [SHIKOH (registered trademark)
UV-7000B, product of The Nippon Synthetic Chemical Industry Co. Ltd.]
UV-2750B: urethane acrylate [SHIKOH (registered trademark)
UV-2750B, product of The Nippon Synthetic Chemical Industry Co. Ltd.]
A-600: poly(ethylene glycol) diacrylate [NK ester A-600, product of Shin-Nakamura Chemical Co., Ltd.]
NPGDA: neopentyl glycol diacrylate [KAYARAD NPGDA, product of Nippon Kayaku Co., Ltd.]
ACMO: 4-acryloylmorphorine [product of Tokyo Chemical Industry, Co., Ltd.]
IBXA: isobornyl acrylate [product of Tokyo Chemical Industry, Co., Ltd.]
LA: lauryl acrylate [product of Tokyo Chemical Industry, Co., Ltd.]
Irg. 1173: 2-hydroxy-2-methyl-1-phenylpropan-1-one [IRGACURE (registered trademark) 1173, product of BASF Japan]
Irg. 184: 1-hydroxycyclohexyl phenyl ketone [IRGACURE (registered trademark) 184, product of BASF Japan]
TPO: diphenyl(2,4,6-trimethylbenzoyl)phosphine oxide [IRGACURE (registered trademark) TPO, product of BASF Japan]
Irg. 907: 2-methyl-1-(4-methylthiophenyl)-2-morpholinopropan-1-one [IRGACURE (registered trademark) 907, product of BASF Japan]
DETX-S: 2,4-diethylthioxanthone [KAYACURE DETX-S, product of Nippon Kayaku Co., Ltd.]

### (1) Preparation of compositions

### [Examples 1 to 5 and Comparative Examples 1 to 3]

UV-7000B or UV-2750B (product of The Nippon Synthetic Chemical Industry Co., Ltd.) was used as a urethane (meth)acrylate compound having a poly(tetramethylene glycol) as a main backbone. Raw materials were weighed and placed in a glass sample bottle at proportions by mass given in Table 1, and the resultant mixture was stirred by means of a magnetic stirrer under heating at about 50°C, to thereby yield a uniform composition.

Separately, the inventor of the present invention conducted a structural analysis of UV-7000B and UV-2750B. As a result, each commercial product was found to have a poly(tetramethylene glycol) backbone as a main backbone, each end of the backbone having a urethane moiety. The molecule of each commercial product includes a cyclohexyl ring or a benzene ring, and two acrylate groups.

**[Table 1]**

| | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| Urethane acrylate compd. | UV-7000B | 62.5 | 50.6 | 50.6 | 50.6 | 42.0 | | | |
| | UV-2750B | | | | | | 40.0 | 40.0 | 100.0 |
| 1-Functional (meth)acrylate | ACMO | | 50.6 | 50.6 | 50.6 | | | 20.0 | |
| | IBXA | 62.5 | | | | 18.1 | | | |
| | LA | 25.0 | 20.2 | 20.2 | 20.2 | | | | |
| ≥2-functional (meth)acrylate | A-600 | | | | | | | | 50.0 |
| | NPGDA | 14.9 | 1.3 | 6.5 | 16.9 | | 60.0 | 60.0 | 50.0 |
| Radical polymerization initiator | Irg. 1173 | 7.5 | 6.1 | 6.1 | 6.1 | | 5.0 | 5.0 | |
| | Irq. 184 | | | | | | 5.0 | 5.0 | 2.0 |
| | TPO | 3.0 | 2.4 | 2.4 | 2.4 | | 2.0 | 2.0 | 2.0 |
| | Irg. 907 | | | | | 3.0 | | | |
| | DETX-S | | | | | 0.03 | | | |
| Urethane acrrylate content of composition [mass%] | | 35.6 | 38.6 | 37.1 | 34.5 | 66.5 | 35.7 | 30.3 | 49.0 |
| ≥2-functional (meth)acrylate content [mass%] of the sum of 1-functional & ≥2-functional (meth)acrylates | | 14.5 | 1.8 | 8.4 | 19.3 | 0.0 | 100.0 | 75.0 | 100.0 |

### (2) Fabrication and assessment of cured film

### (2-1) Fabrication of cured film and assessment of curability and adhesion

Each of the compositions of Examples 1 to 5 and Comparative Example 1 to 3 was applied onto a glass substrate by means of an applicator. The thus-applied composition was irradiated with UV light (intensity: 50 mW/cm², dose: 500 mJ/cm²), to thereby form a cured film having a thickness of about 140 µm. The composition exhibited high curability to form the film. The cured film was adhered to the glass substrate without being delaminated from the substrate. The thus-obtained cured film was evaluated in terms of the following properties. In the cases of Example 5 and Comparative Examples 1 to 3, a part of the evaluations was not carried out.

### (2-2) Tackiness assessment

The surface of the cured film was manually touched. When tackiness was present, the film was assessed with a rating of "C,", whereas when no tackiness was present, the film was assessed with a rating of "A."

### (2-3) Tear strength assessment

The cured film was peeled from the glass substrate and cut into a rectangular piece (length: 10 cm, width: 2 cm). The piece was notched for 3 cm from one shorter side at the center thereof toward the other shorter end, such that the notch was in parallel to each longer side. Each separated portion of the notched side was held by a chuck, and one chuck was moved at a speed of 1 mm/sec, to thereby break the rectangular piece. The resistance against tearing was measured by means of a desktop-type, precision universal tester "Autograph AGS-X" (product of Shimadzu Corporation).

The thus-obtained resistance measurement was divided by the thickness of the cured film, to thereby calculate the resistance per unit film thickness (mN/µm), serving as an index for tear strength.

The greater the tear strength, the higher resistance to tearing of the film (i.e., the higher the tenacity).

### (2-4) Assessment of peelability

Peelability of the cured film from the glass substrate by hand was checked. When peeling was possible, the cured film was assessed with a rating of "A," whereas when peeling was impossible, the cured film was assessed with a rating of "C."

Also, the cured film was cut into a rectangular piece (length: 10 cm, width: 3 cm), while the film remained in an adhered state to the substrate. When the glass substrate was fixed, an end of the rectangular piece of the cured film was peeled for a small portion, and the peeled portion was held by a chuck. The chuck was moved at a speed of 1 cm/sec, to thereby peel the cured film from the glass substrate. The resistance against peeling (N/cm) was measured by means of a desktop-type, precision universal tester "Autograph AGS-X" (product of Shimadzu Corporation).

### (2-5) Waterproofness assessment

A glass substrate provided with each cured film on its surface was immersed in hot water (80°C) for 10 minutes. When a large portion of the film was peeled, the film was assessed with a rating of "C." When a portion of the film was peeled, the film was assessed with a rating of "B." When no peeling was observed, the film was assessed with a rating of "A."

### (2-6) Tolerance to sputtering and reduced pressure

On the cured film, ITO film was formed through sputtering by means of an apparatus SRS-700T/LL (product of Sanyu Electron Co., Ltd.). The sputtering conditions were as follows: thickness: 90 nm, Temp: RT, offset: 50 mm, Ts distance: 100 mm, rotation: 2 rpm, DC: 80 W, Ar 46 sccm, O₂ 1 sccm, 1.0 Pa, and Time: 5 min. When the ITO-supttered cured film exhibited almost the same peelabilty as that observed with the cured film provided with no ITO, the tested cured film was assessed with rating of "A," whereas when difficulty was encountered in peeling the cured film, the tested cured film was assessed with rating of "C."

### (2-7) Water absorbability measurement

A cured film was peeled from a glass substrate, and the peeled film was cut into a square (4 cm x 4 cm) piece. The cut film piece was immersed in deionized water for 30 minutes at room temperature (25°C), and then water droplets on the film surface were removed with dry paper. Subsequently, the mass of the film piece was measured.

The difference in mass between the piece after immersion and the same piece before immersion was divided by the mass of the piece before immersion, to thereby calculate percent water absorption (%).

Table 2 shows the results of the above assessment.

**[Table 2]**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Curability | G | G | G | G | G | G | G | G |
| Adhesion | G | G | G | G | G | G | G | G |
| Tackiness | A | A | A | A | A | A | A | A |
| Peelability | A | A | A | A | A | A | A | - |
| | 0.8 N/cm | 1.5 N/cm | 0.8 N/cm | 0.3 N/cm | 0.8 N/cm | 0.01 N/cm | 0.01 N/cm | |
| Tear strength (tenacity) | 2 mN/µm | 3.3 mN/µm | 2.5 mN/µm | 2 mN/µm | 2.4 mN/µm | 0.1 mN/µm | 0.2 mN/µm | - |
| Waterproofness | A | A | A | A | B | C | C | C |
| Reduced pressure/ITO tolerance | A | A | A | A | - | - | - | - |
| %Water absorption | 0.2% | 3.8% | 2.2% | 1.8% | - | >7.8% | >7.8% | >7.8% |

| | | | | | | | | |
|---|---|---|---|---|---|---|---|---|
| G: good | | | | | | | | |

Only the compositions of the Examples attained excellent curability, and the cured films produced therefrom exhibited excellent adhesion, low tackiness, and high tenacity (tear strength). Furthermore, these films maintained excellent adhesion and peelability, even after immersion in hot water or ITO sputtering in vacuum. As shown in Table 2, the peel strength varied as the increase in poly-functional methacrylate content, indicating that adhesion of the cured film can be controlled, while a high tear strength of 2 or greater is maintained, through tuning of the poly-functional methacrylate content.

In contrast, in the Comparative Examples, the tear strength was lower than 0.8, which is a threshold for practical use. Thus, the Comparative Examples failed to provide films having a practically allowable strength for use as an easily peelable protective film, since the poly-functional (meth)acrylate content was higher than the mono-functional (meth)acrylate content. Also, the cured films of the Comparative Examples were found to have poor waferproofness, due to an excessive poly-functional (meth)acrylate content.

## Claims

1. A composition for forming an easily removable protective resin thin film, **characterized in that** the composition comprises:
a urethane (meth)acrylate compound having a poly(tetramethylene glycol) backbone as a main backbone,
a (meth)acrylate including at least a mono-functional (meth)acrylate, and
a radical polymerization initiator, wherein the mono-functional (meth)acrylate content with respect to the entire amount of the (meth)acrylate is 50 mass% or higher.

2. An easily removable protective resin thin film-forming composition according to claim 1, wherein the (meth)acrylate includes the mono-functional (meth)acrylate and a ≥2-functional (meth)acrylate.

3. An easily removable protective resin thin film-forming composition according to claim 1 or 2, wherein the mono-functional (meth)acrylate includes a mono-functional (meth)acrylate having a ring structure.

4. An easily removable protective resin thin film-forming composition according to any one of claims 1 to 3, wherein the amount of the urethane (meth)acrylate compound having a poly(tetramethylene glycol) backbone as a main backbone in the composition is smaller than 70 mass%.

5. An easily removable protective resin thin film-forming composition according to any one of claims 1 to 4, wherein the amount of the urethane (meth)acrylate compound having a poly(tetramethylene glycol) backbone as a main backbone in the composition is smaller than 50 mass%.

6. An easily removable protective resin thin film, **characterized by** being formed of a cured product of an easily removable protective resin thin film-forming composition as recited in any one of claims 1 to 5.

7. A method for protecting a surface of a coating object, **characterized in that** the method comprises using an easily removable protective resin thin film as recited in claim 6.
